# EUROPÄISCHE PATENTANMELDUNG

(11) **EP 3 112 119 A1**
(43) Veröffentlichungstag der Anmeldung: **04.01.2017**
(21) Anmeldenummer: 15175040.3
(22) Anmeldetag: 02.07.2015
(51) Int. Cl.: B29C 44/56, B29K 25/00, B29K 67/00, B29K 75/00

(54) **VERFAHREN ZUR HERSTELLUNG STRUKTURIERTER THERMOPLASTISCHER SCHAUMSTOFFPLATTEN UND THERMOPLASTISCHE SCHAUMSTOFFPLATTE**

(71) Anmelder: BASF SE, 67056 Ludwigshafen am Rhein (DE)
(72) Erfinder: MERKEL, Peter, 67308 Zellerthal (DE); SCHALL, Herbert, 67354 Roemerberg (DE); DIEHLMANN, Tim, 67283 Obrigheim-Colgenstein (DE); DIETZEN, Franz-Josef, 67454 Hassloch (DE); HAHN, Christoph, Oliver, 67454 Hassloch (DE)
(74) Vertreter: Ellwanger, Arndt

(57) **Zusammenfassung**

Die vorliegende Erfindung betrifft ein Verfahren zur Herstellung einer einseitig strukturierten thermoplastischen Schaumstoffplatte (6). Bei dem erfindungsgemäßen Verfahren wird eine erste Seite einer unstrukturierten thermoplastischen Schaumstoffplatte (1) erwärmt und in eine zweite Seite zumindest eine Vertiefung eingebracht. Die vorliegende Erfindung betrifft außerdem die einseitig strukturierte thermoplastische Schaumstoffplatte (6) als solche.

## Beschreibung

Die vorliegende Erfindung betrifft ein Verfahren zur Herstellung einer einseitig strukturierten thermoplastischen Schaumstoffplatte. Bei dem erfindungsgemäßen Verfahren wird eine erste Seite einer unstrukturierten thermoplastischen Schaumstoffplatte erwärmt und in eine zweite Seite zumindest eine Vertiefung eingebracht. Die vorliegende Erfindung betrifft außerdem die einseitig strukturierte thermoplastische Schaumstoffplatte als solche.

Thermoplastische Schaumstoffplatten besitzen einen breiten Anwendungsbereich. Sie sind insbesondere geeignet zum Einsatz im Bereich der Isolation von z.B. Gebäuden. Thermoplastische Schaumstoffplatten, insbesondere durch Extrusion hergestellte thermoplastische Schaumstoffplatten, besitzen nicht nur gute wärmeisolierende Eigenschaften aufgrund ihrer niedrigen Wärmeleitfähigkeit, sondern weisen zudem auch durch die glatte Schäumhaut auf beiden Seiten der Oberfläche eine geringe Wasseraufnahme auf. Dies ist ebenfalls vorteilhaft für den Einsatz im Bereich der Isolation.

Nachteilig ist allerdings, dass die Oberflächen aufgrund der glatten Schäumhaut nur eine geringe Haftung auf üblichen Baumaterialien, wie etwa Zement, Mörtel, Beton und Putz aufweisen.

Um die Haftung zwischen den Oberflächen der thermoplastischen Schaumstoffplatten und den üblichen Baumaterialien zu verbessern, kann beispielsweise die Oberfläche der thermoplastischen Schaumstoffplatten strukturiert werden. Hierzu sind im Stand der Technik verschiedene Verfahren beschrieben.

DE 10 003 808 A1 beschreibt ein Verfahren zur Oberflächenprägung von thermoplastischen Schaumstoffplatten, insbesondere von extrudierten Polystyrolschaumplatten. In diesem Verfahren wird die Oberfläche der thermoplastischen Schaumstoffplatten um ca. 2 bis 3 mm durch eine beheizte Prägewalze plastifiziert und so nachgeschäumt. Dadurch bilden sich Strukturierungen an der Oberfläche. Bei dem Verfahren der DE 10 003 808 A1 werden thermoplastischen Schaumstoffplatten erhalten, die auf zwei gegenüberliegenden Seiten strukturiert sind.

Nachteilig bei der beidseitigen Strukturierung von thermoplastischen Schaumstoffplatten ist, dass die Wasseraufnahme der thermoplastischen Schaumstoffplatten erhöht wird, da auf beiden Seiten die Oberflächen offener sind als ohne Strukturierung und dadurch leichter Wasser in die Schaumstoffplatten diffundiert. In dem in DE 10 003 808 A1 beschriebenen Verfahren ist zudem nachteilig, dass die Strukturierung kurz nach der Herstellung der thermoplastischen Schaumstoffplatte durchgeführt werden muss, da ein Nachschäumen nur so lange möglich ist, wie die thermoplastische Schaumstoffplatte noch Treibmittel enthält.

Die CH 687450 A5 beschreibt ebenfalls die Herstellung von strukturierten thermoplastischen Schaumstoffplatten. Dabei wird eine thermoplastische Schaumstoffplatte über mindestens ein beheiztes Prägewerkzeug geführt, wodurch die Außenhaut der thermoplastischen Schaumstoffplatte zu fließen beginnt und sich verformt. Dabei bilden sich die Strukturierungen. In dem in CH 687450 A5 beschriebenen Verfahren kann entweder eine thermoplastische Schaumstoffplatte auf zwei gegenüberliegenden Seiten strukturiert werden oder es können zwei thermoplastische Schaumstoffplatten übereinander gelegt werden und so jeweils auf einer Seite strukturiert werden. Die jeweilige Seite, an denen die beiden thermoplastischen Schaumstoffplatten miteinander in Kontakt sind, wird dann nicht strukturiert.

Nachteilig bei dem in CH 687450 A5 beschriebenen Verfahren ist, dass nur eine Strukturierung auf zwei Seiten der thermoplastischen Schaumstoffplatte möglich ist. Somit wird die Wasseraufnahme wie vorstehend beschrieben erhöht. Eine einseitige Strukturierung ist nur möglich, wenn zwei Platten übereinander gelegt werden. Dies macht das in CH 687450 A5 beschriebene Verfahren sehr aufwändig, da es notwendig ist, entweder zwei übereinander liegende Extruder einzusetzen, durch die die thermoplastischen Schaumstoffplatten extrudiert werden und dann direkt übereinander gelegt werden können, oder es ist ein zusätzlicher Verfahrensschritt notwendig, bei dem die thermoplastischen Schaumstoffplatten übereinander gelegt werden. Ein weiteres Problem bei dem in CH 687450 A5 beschriebenen Verfahren ist, dass sich die einseitig strukturierten thermoplastischen Schaumstoffplatten verziehen (sogenanntes "Schüsseln"). Eine Verwendung dieser thermoplastischen Schaumstoffplatten im Bausektor ist dann, wenn überhaupt, nur noch begrenzt möglich.

Die der vorliegenden Erfindung zugrunde liegende Aufgabe besteht darin, ein neues Verfahren zur Herstellung von einseitig strukturierten thermoplastischen Schaumstoffplatten bereitzustellen, die keinen oder nur einen geringen Verzug aufweisen.

Gelöst wird diese Aufgabe durch ein Verfahren zur Herstellung einer einseitig strukturierten thermoplastischen Schaumstoffplatte, umfassend die Schritte a) bis c):
a) Bereitstellung einer unstrukturierten thermoplastischen Schaumstoffplatte, die mindestens ein Polymer mit einer Glasübergangstemperatur (T_{G}) enthält und die eine erste Seite und eine zweite Seite umfasst,
b) Erwärmen der ersten Seite der unstrukturierten thermoplastischen Schaumstoffplatte auf eine Temperatur (T), die unterhalb der Glasübergangstemperatur (T_{G}) des in der unstrukturierten thermoplastischen Schaumstoffplatte enthaltenen mindestens einen Polymers liegt, und
c) Einbringen von zumindest einer Vertiefung in die zweite Seite der unstrukturierten thermoplastischen Schaumstoffplatte unter Erhalt der einseitig strukturierten thermoplastischen Schaumstoffplatte,
wobei die Schritte b) und c) nacheinander oder gleichzeitig durchgeführt werden.

Es wurde überraschend gefunden, dass durch das erfindungsgemäße Verfahren die erhaltenen einseitig strukturierten thermoplastischen Schaumstoffplatten eben bleiben und sich somit nicht verziehen und nicht schüsseln.

Im Rahmen der vorliegenden Erfindung wird unter "nicht verziehen" und "nicht schüsseln" verstanden, dass auf eine Länge von 2850 mm sich die einseitig strukturierte thermoplastische Schaumstoffplatte um höchstens 10 mm, bevorzugt im Bereich von 0 bis 5 mm und insbesondere bevorzugt im Bereich von 0 bis 3 mm verzieht. Der Verzug wird bestimmt gemäß DIN EN 825 (Wärmedämmstoffe für das Bauwesen - Bestimmung der Ebenheit; 2013).

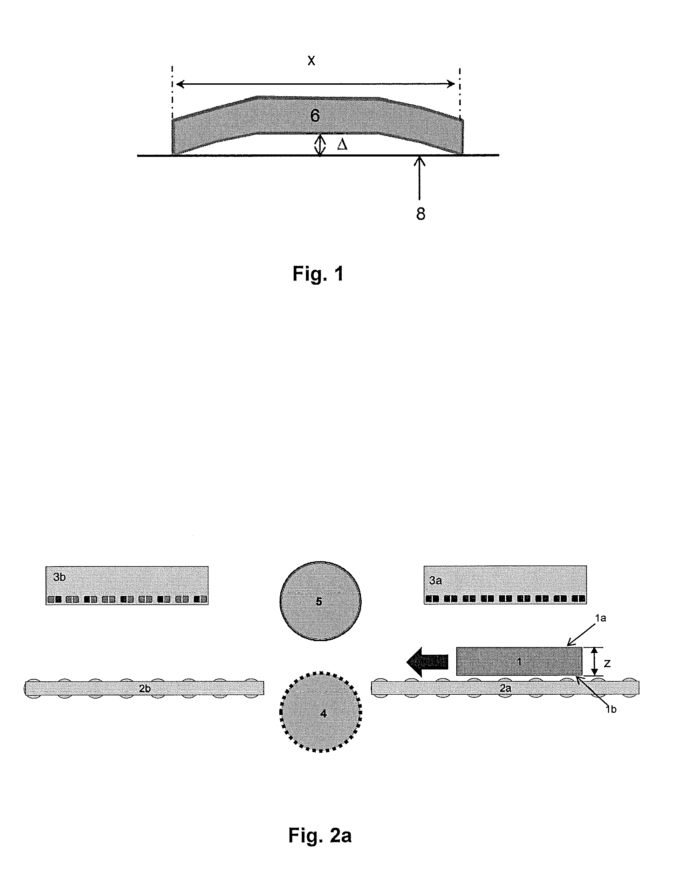

Figur 1 zeigt beispielhaft, wie der Verzug der einseitig strukturierten thermoplastischen Schaumstoffplatte bestimmt wird. Die erhaltene einseitig strukturierte thermoplastische Schaumstoffplatte 6 mit einer Länge x von 2850 mm wird mit ihrer konkaven Seite auf eine planare Fläche 8 gelegt. Der Abstand Δ zwischen der planaren Fläche 8 und der gewölbten Mitte der einseitig strukturierten thermoplastischen Schaumstoffplatte 6 entspricht der Schüsselung. Der Abstand Δ und somit auch die Schüsselung liegen bei höchstens 10 mm, bevorzugt im Bereich von 0 bis 5 mm und insbesondere bevorzugt im Bereich von 0 bis 3 mm bei einer Länge x der einseitig strukturierten thermoplastischen Schaumstoffplatte 6 von 2850 mm.

Durch die erfindungsgemäß hergestellte einseitig strukturierte thermoplastische Schaumstoffplatte wird zudem eine besonders gute Haftzugfestigkeit zwischen Putz und/oder Beton und der zweiten Seite der einseitig strukturierten thermoplastischen Schaumstoffplatte erzielt. Die Haftzugfestigkeit liegt beispielsweise bei mindestens 50 kPa, bevorzugt bei mindestens 100 kPa und besonders bevorzugt bei mindestens 200 kPa, gemessen nach DIN EN 1607 (2013), an Proben nach DIN EN 13494 (2003).

Die erfindungsgemäß hergestellten einseitig strukturierten thermoplastischen Schaumstoffplatten weisen zudem eine geringe Wasseraufnahme auf, da vorzugsweise die Schäumhaut auf der ersten Seite nicht entfernt wird und diese somit weiterhin als Barriere für Wasser dient.

Unter der Glasübergangstemperatur (T_{G}) wird im Rahmen der vorliegenden Erfindung die Temperatur verstanden, bei der die amorphen Bereiche eines amorphen oder teilkristallinen Kunststoffs beim Erwärmen in einen gummielastischen Zustand übergehen. Die Glasübergangstemperatur (T_{G}) wird auch als Erweichungstemperatur bezeichnet. Die Glasübergangstemperatur (T_{G}) wird erfindungsgemäß nach der ISO 306 (2013) als sogenannte Vicat-Erweichungstemperatur bestimmt.

Nachfolgend wird das erfindungsgemäße Verfahren näher erläutert.

In Schritt a) des erfindungsgemäßen Verfahrens wird eine unstrukturierte thermoplastische Schaumstoffplatte, die mindestens ein Polymer mit einer Glasübergangstemperatur (T_{G}) enthält und die eine erste und eine zweite Seite umfasst, bereitgestellt.

Unstrukturierte thermoplastische Schaumstoffplatten sind dem Fachmann als solche prinzipiell bekannt. Geeignete unstrukturierte thermoplastische Schaumstoffplatten sind beispielsweise in Form von Blends in der WO 2009/047487 offenbart. Beispielsweise kann die unstrukturierte thermoplastische Schaumstoffplatte aus amorphen, teilkristallinen oder kristallinen thermoplastischen Schaumstoffen hergestellt sein.

Ist die unstrukturierte thermoplastische Schaumstoffplatte aus kristallinen thermoplastischen Schaumstoffen hergestellt, so weisen diese keine Glasübergangstemperatur (T_{G}) auf, sondern nur eine Schmelztemperatur (T_{M}). Im Rahmen der vorliegenden Erfindung wird daher unter der Glasübergangstemperatur (T_{G}) bei kristallinen thermoplastischen Schaumstoffen die Schmelztemperatur (T_{M}) verstanden.

Die unstrukturierte thermoplastische Schaumstoffplatte ist beispielsweise ein Partikelschaumstoff oder ein Extrusionsschaumstoff, bevorzugt ein Extrusionsschaumstoff.

Erfindungsgemäß enthält die unstrukturierte thermoplastische Schaumstoffplatte mindestens ein Polymer. Als in der unstrukturierten thermoplastischen Schaumstoffplatte enthaltenes mindestens ein Polymer eignen sich alle dem Fachmann bekannten Polymere. Bevorzugt ist das mindestens eine Polymer, das in der unstrukturierten thermoplastischen Schaumstoffplatte enthalten ist, ausgewählt aus der Gruppe bestehend aus Polystyrol, Polystyrolcopolymeren, Polyethersulfon, Polysulfon, Polyethylenterephthalat, Polyurethan, Polyolefinen, Polyolefincopolymeren und Acrylpolymeren. Bevorzugt ist das in der unstrukturierten thermoplastischen Schaumstoffplatte enthaltene mindestens eine Polymer, ausgewählt aus der Gruppe bestehend aus Polystyrol, Polystyrolcopolymeren und Polyethylenterephthalat.

Geeignete Polyolefine sind beispielsweise Polyethylen und/oder Polypropylen.

Polystyrolcopolymere werden auch als "aus Styrol hergestellte Copolymere" oder als "Styrolcopolymerisate" bezeichnet. Ist das in der unstrukturierten thermoplastischen Schaumstoffplatte enthaltene mindestens eine Polymer ein Polystyrolcopolymer, bedeutet dies, dass zur Herstellung des Polymers neben den monomeren Styrolen mindestens ein weiteres Monomer (Comonomer) erforderlich ist. Als Comonomere zu Styrol eignen sich prinzipiell alle mit Styrol polymerisierbaren Monomere. Vorzugsweise sind mindestens 50 Gew.-% Styrol in dem Polystyrolcopolymer einpolymerisiert, bezogen auf das Gesamtgewicht des Copolymers.

Vorzugsweise weist ein aus Styrol hergestelltes Copolymer als Comonomer zu Styrol ein Monomer auf, das ausgewählt ist aus a-Methylstyrol, kernhalogenierten Styrolen, kernalkylierten Styrolen, Acrylnitril, Acrylsäureestern, Methacrylsäureestern, N-Vinylverbindungen, Maleinsäureanhydrid, Butadien, Divinylbenzol und Butandioldiacrylat. Acrylsäureester sowie Methacrylsäureester sind vorzugsweise erhältlich aus Alkoholen mit ein bis acht Kohlenstoffatomen. Eine geeignete N-Vinylverbindung ist beispielsweise Vinylcarbazol. Bevorzugte, aus Styrol hergestellte Copolymere sind Styrol-Acrylnitril-Copolymere (SAN) oder Acrylnitril-Butadien-Styrol-Copolymere (ABS).

Ist die unstrukturierte thermoplastische Schaumstoffplatte ein Partikelschaumstoff, so ist der Partikelschaumstoff bevorzugt Styropor, Neopor oder E-Por, die kommerziell von der BASF SE erhältlich sind. In diesen ist das mindestens eine Polymer ein Polystyrol, ein Polystyrolcopolymer oder eine Mischung aus Polystyrol oder einem Polystyrolcopolymer mit mindestens einem weiteren Polymer. Mischungen aus Polystyrol oder einem Polystyrolcopolymer mit mindestens einem weiteren Polymer werden auch als Blends bezeichnet. Als mindestens ein weiteres Polymer eignen sich alle dem Fachmann bekannten Polymere wie beispielsweise die vorstehend beschriebenen Polymere.

Ist die unstrukturierte thermoplastische Schaumstoffplatte ein Extrusionsschaumstoff, so ist das mindestens eine Polymer vorzugsweise Polystyrol, ein aus Styrol hergestelltes Copolymer oder ein Polyethylenterephthalat sowie Mischungen daraus. Besonders bevorzugt ist die unstrukturierte thermoplastische Schaumstoffplatte ein Extrusionsschaumstoff aus extrudiertem Polystyrol, der beispielsweise unter der Bezeichnung *Styrodur* von der BASF SE kommerziell erhältlich ist.

Die Dimension der unstrukturierten thermoplastischen Schaumstoffplatte ist beliebig. Hinsichtlich ihrer Länge und Breite kann sie Maße im Zentimeterbereich bis hin zu mehreren Metern aufweisen. Hinsichtlich ihrer dritten Dimension (Dicke) sind theoretisch ebenfalls beliebige Maße denkbar. In der Praxis weisen die unstrukturierten thermoplastischen Schaumstoffplatten üblicherweise eine Dicke im Bereich von 20 bis 300 mm, vorzugsweise im Bereich von 50 bis 200 mm auf.

Bezogen auf ein rechtwinkliges Koordinatensystem wird erfindungsgemäß die Länge der unstrukturierten thermoplastischen Schaumstoffplatte als solche, auch als x-Richtung bezeichnet, die entsprechende Breite als y-Richtung und die Dicke als z-Richtung.

Beispielsweise weist die in Schritt a) bereitgestellte unstrukturierte thermoplastische Schaumstoffplatte eine Länge (x-Richtung) von 500 bis 3500 mm und vorzugsweise von 1000 bis 3000 mm, eine Breite (y-Richtung) von 500 bis 1250 mm, vorzugsweise von 500 bis 900 mm und eine Dicke (z-Richtung) von 20 bis 300 mm, vorzugsweise von 50 bis 200 mm, auf.

Die unstrukturierte thermoplastische Schaumstoffplatte kann eine beliebige Dichte aufweisen. Vorzugsweise weist die unstrukturierte thermoplastische Schaumstoffplatte eine Dichte von ≤ 200 g/l, bevorzugt eine Dichte von < 100 g/l, insbesondere bevorzugt von < 50 g/l, auf. Üblicherweise erfolgt die Bestimmung der Dichte nach DIN EN 1602, Stand 2013.

Erfindungsgemäß weist das in der unstrukturierten thermoplastischen Schaumstoffplatte enthaltene mindestens eine Polymer eine Glasübergangstemperatur (T_{G}) auf. Unter der Glasübergangstemperatur (T_{G}) wird im Rahmen der vorliegenden Erfindung die Temperatur verstanden, bei der die amorphen Bereiche eines amorphen oder teilkristallinen Kunststoffs beim Erwärmen in einen gummielastischen Zustand übergehen. Die Glasübergangstemperatur (T_{G}) wird auch als Erweichungstemperatur bezeichnet. Die Glasübergangstemperatur (T_{G}) wird erfindungsgemäß nach der ISO 306 (2013) als sogenannte "Vicat-Erweichungstemperatur" bestimmt.

Die Glasübergangstemperatur (T_{G}) des in der unstrukturierten thermoplastischen Schaumstoffplatte enthaltenen mindestens einen Polymers liegt üblicherweise im Bereich von 0 bis 300 °C, bevorzugt im Bereich von 20 bis 200 °C und insbesondere bevorzugt im Bereich von 50 bis 150 °C.

Erfindungsgemäß umfasst die unstrukturierte thermoplastische Schaumstoffplatte eine erste Seite und eine zweite Seite. Die erste Seite der unstrukturierten thermoplastischen Schaumstoffplatte kann relativ zu der zweiten Seite der unstrukturierten thermoplastischen Schaumstoffplatte beliebig ausgerichtet sein. Bevorzugt liegt die erste Seite der unstrukturierten thermoplastischen Schaumstoffplatte der zweiten Seite der unstrukturierten thermoplastischen Schaumstoffplatte gegenüber.

Die erste Seite der unstrukturierten thermoplastischen Schaumstoffplatte und die zweite Seite der unstrukturierten thermoplastischen Schaumstoffplatte bilden jeweils eine Oberfläche der unstrukturierten thermoplastischen Schaumstoffplatte. Die erste Seite der unstrukturierten thermoplastischen Schaumstoffplatte wird daher auch als erste Oberfläche bezeichnet, die zweite Seite der unstrukturierten thermoplastischen Schaumstoffplatte wird auch als zweite Oberfläche bezeichnet.

Die unstrukturierte thermoplastische Schaumstoffplatte kann eine beliebige erste Seite aufweisen. Beispielsweise kann die erste Seite mit einer Schäumhaut versehen sein oder schäumhautfrei sein. Vorzugsweise weist die erste Seite eine Schäumhaut auf.

Bei Extrusionsschaumstoffen wird die Schäumhaut auch als Extrusionshaut bezeichnet.

Bevorzugt weist die erste Seite keine strukturierten Vertiefungen auf.

Weist die erste Seite eine Schäumhaut auf, so ist die erste Seite im Wesentlichen planar. Unter "Im Wesentlichen planar" wird im Rahmen der vorliegenden Erfindung verstanden, dass die erste Seite auch Vertiefungen und/oder Vorsprünge enthalten kann, die entsprechenden Vertiefungen und/oder Vorsprünge jedoch willkürlich über die erste Seite verteilt sind. Bei den Vertiefungen und/oder Vorsprüngen handelt es sich also nicht um strukturierte Vertiefungen.

Unter dem Begriff "schäumhautfrei" wird im Rahmen der vorliegenden Erfindung verstanden, dass die beim Herstellungsprozess der unstrukturierten thermoplastischen Schaumstoffplatte entstandene Schäumhaut, beispielsweise durch Hobeln oder Fräsen, wieder entfernt wird. Eine solche unstrukturierte thermoplastische Schaumstoffplatte kann eine relativ unebene erste Seite aufweisen, die zahlreiche Vertiefungen oder Vorsprünge enthält. Die entsprechenden Vertiefungen sind jedoch willkürlich über die erste Seite der unstrukturierten thermoplastischen Schaumstoffplatte verteilt, die Vertiefungen weisen also keine Struktur auf. Es ist auch möglich, dass eine schäumhautfreie unstrukturierte thermoplastische Schamstoffplatte eine völlig ebene erste Seite aufweist, die (auf makroskopischer Ebene) keine Vertiefungen und Vorsprünge enthält. Der Vollständigkeit halber wird darauf hingewiesen, dass bei Verwendung eines Extrusionsschaumstoffs die erste Seite auch als extrusionshautfrei anstelle von schäumhautfrei bezeichnet wird, wenn sie schäumhautfrei ist.

Die unstrukturierte thermoplastische Schaumstoffplatte kann eine beliebige zweite Seite aufweisen. Beispielsweise kann die zweite Seite eine Schäumhaut aufweisen oder schäumhautfrei sein. Vorzugsweise weist die zweite Seite eine Schäumhaut auf.

Für die zweite Seite gelten die gleichen Ausführungen und Bevorzugungen in Bezug Schäumhaut und die schäumhautfreie Seite wie vorstehend für die erste Seite der unstrukturierten thermoplastischen Schaumstoffplatte ausgeführt.

Erfindungsgemäß besonders bevorzugt weist die in Schritt a) bereitgestellte unstrukturierte thermoplastische Schaumstoffplatte auf der ersten Seite und/oder auf der zweiten Seite eine Schäumhaut auf. Am meisten bevorzugt weist die in Schritt a) bereitgestellte unstrukturierte thermoplastische Schaumstoffplatte auf der ersten Seite und auf der zweiten Seite eine Schäumhaut auf.

In Schritt b) wird die erste Seite der unstrukturierten thermoplastischen Schaumstoffplatte auf eine Temperatur (T), die unterhalb der Glasübergangstemperatur (T_{G}) des in der unstrukturierten thermoplastischen Schaumstoffplatte enthaltenen mindestens eines Polymers liegt, erwärmt.

Die Erwärmung der ersten Seite der unstrukturierten thermoplastischen Schaumstoffplatte auf die Temperatur (T) kann nach allen dem Fachmann bekannten Methoden erfolgen. Üblicherweise wird dazu die erste Seite der unstrukturierten thermoplastischen Schaumstoffplatte einer Wärmequelle ausgesetzt. Geeignete Wärmequellen und Vorrichtungen hierzu sind dem Fachmann bekannt.

Vorzugsweise wird in Schritt b) die erste Seite der unstrukturierten thermoplastischen Schaumstoffplatte durch Wasserdampf, Warmluft, ein IR-Strahler und/oder ein Heizelement erwärmt. Ein bevorzugtes Heizelement ist ein Heizschwert, ein Heizgitter oder eine Heizplatte.

Wird als Heizelement beispielsweise ein Heizschwert, ein Heizgitter oder eine Heizplatte eingesetzt so kann in Schritt b) die erste Seite der unstrukturierten thermoplastischen Schaumstoffplatte beispielsweise kontinuierlich erwärmt werden. Die Erwärmung kann mit Kontakt oder kontaktlos erfolgen; bevorzugt erfolgt sie kontaktlos. Unter kontaktlos wird im Rahmen der vorliegenden Erfindung verstanden, dass die Wärmequelle bevorzugt der IR-Strahler und/oder das Heizelement, die erste Seite der unstrukturierten thermoplastischen Schaumstoffplatte beim Erwärmen nicht berührt.

Der Abstand zwischen dem Heizelement und der ersten Seite der unstrukturierten thermoplastischen Schaumstoffplatte liegt dann beispielsweise in einem Bereich von 0,1 bis 1 cm, bevorzugt im Bereich von 0,1 bis 0,7 cm und insbesondere bevorzugt von 0,1 bis 0,5 cm.

Der Abstand zwischen dem IR-Strahler und der ersten Seite der unstrukturierten thermoplastischen Schaumstoffplatte liegt dann beispielsweise in einem Bereich von 1 bis 30 cm, bevorzugt im Bereich von 5 bis 30 cm und insbesondere bevorzugt von 10 bis 30 cm.

Diese Ausführungsform ist besonders vorteilhaft, da dadurch ein Verschmutzen der Wärmequelle, insbesondere des IR-Strahlers und/oder des Heizelements durch die erste Seite der unstrukturierten thermoplastischen Schaumstoffplatte vermieden wird und außerdem die Oberfläche (die erste Seite) der unstrukturierten thermoplastischen Schaumstoffplatte nicht beschädigt wird.

Die Temperatur (T) in Schritt b) liegt üblicherweise im Bereich von 30 bis 250 °C, bevorzugt im Bereich von 50 bis 200 °C und insbesondere bevorzugt im Bereich von 70 bis 110 °C. Es versteht sich von selbst, dass die Temperatur (T) der Temperatur der ersten Seite der unstrukturierten thermoplastischen Schaumstoffplatte in Schritt b) entspricht.

Das Erwärmen der ersten Seite der unstrukturierten thermoplastischen Schaumstoffplatte auf die Temperatur (T) erfolgt üblicherweise für einen Zeitraum im Bereich von 1 sec bis 10 min, bevorzugt im Bereich von 2 sec bis 1 min und insbesondere bevorzugt im Bereich von 5 sec bis 30 sec.

Der Zeitraum für den die erste Seite der unstrukturierten thermoplastischen Schaumstoffplatte auf die Temperatur (T) in Schritt b) erwärmt wird, wird auch als "Heizzeit" bezeichnet. Unter dem Begriff "Heizzeit" wird also im Rahmen der vorliegenden Erfindung der Zeitraum verstanden für den die erste Seite der unstrukturierten thermoplastischen Schaumstoffplatte in Schritt b) erwärmt wird, insbesondere bevorzugt durch ein Heizelement, das ein Heizschwert, ein Heizgitter, eine Heizplatte oder ein IR-Strahler ist, wobei IR-Strahler insbesondere bevorzugt sind.

Die Erwärmung der ersten Seite der unstrukturierten thermoplastischen Schaumstoffplatte kann nach allen dem Fachmann bekannten Methoden erfolgen. Beispielsweise kann die Wärmequelle, bevorzugt das Heizelement, unter oder über, bevorzugt über, die erste Seite der unstrukturierten thermoplastischen Schaumstoffplatte bewegt werden. Dabei wird beispielsweise die Wärmequelle, bevorzugt das Heizelement von einer Position, in der kein Erwärmen möglich ist, in eine Position, in der ein Erwärmen der ersten Seite der unstrukturierten thermoplastischen Schaumstoffplatte möglich ist, bewegt und anschließend wieder in eine Position bewegt, in der kein Erwärmen der ersten Seite der unstrukturierten thermoplastischen Schaumstoffplatte möglich ist. In der Position, in der ein Erwärmen der unstrukturierten thermoplastischen Schaumstoffplatte möglich ist, kann die Wärmequelle, bevorzugt das Heizelement, auch angehalten werden.

Ebenso ist es möglich und erfindungsgemäß bevorzugt, die unstrukturierte thermoplastische Schaumstoffplatte unter oder über, bevorzugt unter, einem Heizelement entlang zu bewegen. Dabei wird die unstrukturierte thermoplastische Schaumstoffplatte beispielsweise von einer Position, in der kein Erwärmen möglich ist, in eine Position, in der die erste Seite der unstrukturierten thermoplastischen Schaumstoffplatte erwärmt werden kann, bewegt und anschließend wieder in eine Position bewegt, in der ein Erwärmen der ersten Seite der unstrukturierten thermoplastischen Schaumstoffplatte nicht möglich ist. Es ist möglich, dass die unstrukturierte thermoplastische Schaumstoffplatte, in der Position, in der ein Erwärmen der ersten Seite der unstrukturierten thermoplastischen Schaumstoffplatte möglich ist, auch angehalten wird.

Die unstrukturierte thermoplastische Schaumstoffplatte kann beispielsweise für einen Zeitraum von 1 sec bis 10 min, bevorzugt für einen Zeitraum von 2 sec bis 1 min und insbesondere bevorzugt für einen Zeitraum von 5 bis 30 sec angehalten werden.

In Schritt c) wird zumindest eine Vertiefung in die zweite Seite der unstrukturierten thermoplastischen Schaumstoffplatte eingebracht unter Erhalt der einseitig strukturierten thermoplastischen Schaumstoffplatte.

Die zumindest eine Vertiefung kann nach allen dem Fachmann bekannten Methoden in die zweite Seite der unstrukturierten thermoplastischen Schaumstoffplatte eingebracht werden. Beispielsweise kann die zumindest eine Vertiefung in die zweite Seite der unstrukturierten thermoplastischen Schaumstoffplatte eingebracht werden durch Hobeln, Fräsen und/oder Prägen. Bevorzugt wird die zumindest eine Vertiefung in die zweite Seite der unstrukturierten thermoplastischen Schaumstoffplatte eingebracht durch Prägen. Weiterhin bevorzugt wird die zumindest eine Vertiefung eingebracht durch ein Prägewerkzeug. Prägewerkzeuge als solche sind dem Fachmann bekannt und beispielsweise Prägestempel oder Prägewalzen.

Erfindungsgemäß bevorzugt wird also in Schritt c) die zumindest eine Vertiefung in die zweite Seite der unstrukturierten thermoplastischen Schaumstoffplatte durch ein Prägewerkzeug, besonders bevorzugt durch eine Prägewalze, eingebracht.

Die zweite Seite der unstrukturierten thermoplastischen Schaumstoffplatte kann während des Einbringens der zumindest einen Vertiefung beliebige Temperaturen aufweisen. Bevorzugt wird die zweite Seite der unstrukturierten thermoplastischen Schaumstoffplatte zum Einbringen von zumindest einer Vertiefung in die zweite Seite der unstrukturierten thermoplastischen Schaumstoffplatte in Schritt c) erwärmt. Die zweite Seite der unstrukturierten thermoplastischen Schaumstoffplatte kann direkt vor Schritt c) und/oder während Schritt c) erwärmt werden. Bevorzugt wird die zweite Seite der unstrukturierten thermoplastischen Schaumstoffplatte während Schritt c) erwärmt.

Zum Erwärmen der zweiten Seite der unstrukturierten thermoplastischen Schaumstoffplatte eignen sich alle dem Fachmann bekannten Methoden.

Beispielsweise kann die zweite Seite der unstrukturierten thermoplastischen Schaumstoffplatte mit den gleichen Wärmequellen und/oder Vorrichtungen wie die erste Seite der unstrukturierten thermoplastischen Schaumstoffplatte erwärmt werden.

Für die Wärmequellen und/oder Vorrichtungen zum Erwärmen der zweiten Seite der unstrukturierten thermoplastischen Schaumstoffplatte gelten daher die zuvor beschriebenen Ausführungen und Bevorzugungen für die Wärmequellen und/oder Vorrichtungen zum Erwärmen der ersten Seite der unstrukturierten thermoplastischen Schaumstoffplatte entsprechend. Bevorzugt wird die zweite Seite der unstrukturierten thermoplastischen Schaumstoffplatte während Schritt c) durch ein Prägewerkzeug, bevorzugt durch eine Prägewalze, erwärmt.

Bevorzugt wird in Schritt c) die zumindest eine Vertiefung in die zweite Seite der unstrukturierten thermoplastischen Schaumstoffplatte eingebracht durch ein Prägewerkzeug, bevorzugt eine Prägewalze, wobei das Prägewerkzeug die zweite Seite der unstrukturierten thermoplastischen Schaumstoffplatte erwärmt. Bevorzugt erwärmt das Prägewerkzeug die zweite Seite der unstrukturierten thermoplastischen Schaumstoffplatte auf eine Temperatur, die im Bereich von 50 bis 300 °C, vorzugsweise im Bereich von 70 bis 250 °C und insbesondere bevorzugt im Bereich von 90 bis 220 °C oberhalb der Glasübergangstemperatur (T_{G}) des in der unstrukturierten thermoplastischen Schaumstoffplatte enthaltenen mindestens einen Polymers liegt.

Erfindungsgemäß außerdem bevorzugt liegt die Temperatur der zweiten Seite der unstrukturierten thermoplastischen Schaumstoffplatte während Schritt c) im Bereich von 50 bis 300 °C, vorzugsweise im Bereich von 70 bis 250 °C und insbesondere bevorzugt im Bereich von 90 bis 220 °C oberhalb der Glasübergangstemperatur (T_{G}) des in der unstrukturierten thermoplastischen Schaumstoffplatte enthaltenen mindestens einen Polymers.

Wie vorstehend beschrieben, wird die zweite Seite der unstrukturierten thermoplastischen Schaumstoffplatte bevorzugt durch das Prägewerkzeug erwärmt. Die Temperatur des Prägewerkzeugs liegt beispielsweise im Bereich von 50 bis 1000 °C, bevorzugt im Bereich von 100 bis 500 °C, mehr bevorzugt im Bereich von 200 bis 500 °C und insbesondere bevorzugt im Bereich von 200 bis 400 °C.

Das Prägewerkzeug enthält zumindest einen Vorsprung. Dieser Vorsprung bringt die zumindest eine Vertiefung in die zweite Seite der unstrukturierten thermoplastischen Schaumstoffplatte ein. Es versteht sich von selbst, dass der mindestens eine Vorsprung des Prägewerkzeuges, das negativ der mindestens eine Vertiefung, die in die zweite Seite der unstrukturierten thermoplastischen Schaumstoffplatte eingebracht wird, ist.

Die zumindest eine Vertiefung, die in die zweite Seite der unstrukturierten thermoplastischen Schaumstoffplatte eingebracht wird, kann beliebige Formen aufweisen. Vorzugsweise ist die zumindest eine Vertiefung punktförmig, rautenförmig, rechteckförmig, quadratförmig, linienförmig oder gitterförmig, besonders bevorzugt gitterförmig.

"Zumindest eine Vertiefung" bedeutet im Rahmen der vorliegenden Erfindung sowohl genau eine Vertiefung, als auch zwei oder mehr Vertiefungen. Bevorzugt werden zwei oder mehr Vertiefungen eingebracht.

Die zumindest eine Vertiefung kann im Rahmen der vorliegenden Erfindung auch als Muster oder Strukturmuster bezeichnet werden. Werden zwei oder mehrere Vertiefungen in die zweite Seite der unstrukturierten thermoplastischen Schaumstoffplatte eingebracht, so können sich auch verschiedene Formen abwechseln. Beispielsweise können die vorstehend beschriebenen Formen der Vertiefungen sich abwechseln und/oder beispielsweise mehrere Linien von unterschiedlicher Stärke (Breite) und/oder die sich beispielsweise mit Rauten oder Quadraten abwechseln, eingebracht werden.

Werden zwei oder mehr Vertiefungen in die zweite Seite der unstrukturierten thermoplastischen Schaumstoffplatte eingebracht, so können die Abstände zwischen den einzelnen Vertiefungen beliebige Werte (Größen) annehmen, beispielsweise 30 mm. Vorzugsweise beträgt der Abstand zwischen den einzelnen Vertiefungen maximal 20 mm (Durchschnittswert über alle Vertiefungen). Insbesondere beträgt der Abstand 1,5 bis 20 mm. Die Breite einer Vertiefung, beispielsweise der Durchmesser eines Punktes bei punktförmigen Vertiefung oder die Breite einer Linie bei linien- oder gitterförmigen Vertiefungen kann beliebig sein, vorzugsweise ist sie im Bereich von 1 bis 25 mm, mehr bevorzugt im Bereich von 1 bis 15 mm, insbesondere bevorzugt im Bereich von 1 bis 10 mm.

Ebenso kann die zumindest eine Vertiefung als solche (also die Tiefe der Vertiefung) beliebige Werte (Größen) annehmen. Es ist denkbar, dass in Teilbereichen der zweiten Seite der unstrukturierten thermoplastischen Schaumstoffplatte die gleichen Vertiefungen eingebracht werden, die sich jedoch hinsichtlich ihrer Tiefe unterscheiden.

Bevorzugt weist die im Schritt c) eingebrachte zumindest eine Vertiefung eine Tiefe im Bereich von 0,1 bis 10 mm, besonders bevorzugt im Bereich von 0,5 bis 8 mm, insbesondere bevorzugt im Bereich von 0,7 bis 5 mm auf.

Die Tiefe der Vertiefung kann einerseits durch die Höhe des Vorsprungs des Prägewerkzeugs eingestellt werden. Andererseits kann die Tiefe der Vertiefung durch den Druck, mit dem das Prägewerkzeug in die zweite Seite der unstrukturierten thermoplastischen Schaumstoffplatte gedrückt wird, bestimmt werden. Je niedriger der Druck, mit dem das Prägewerkzeug in die zweite Seite der unstrukturierten thermoplastischen Schaumstoffplatte gedrückt wird, desto geringer ist die Tiefe der Vertiefung.

Beim Einbringen der zumindest einen Vertiefung in Schritt c) in die zweite Seite der unstrukturierten thermoplastischen Schaumstoffplatte kann auf die erste Seite der unstrukturierten thermoplastischen Schaumstoffplatte ein Druck aufgebracht werden. Dieser Druck wird auch als Gegendruck bezeichnet.

Der Gegendruck kann mit allen dem Fachmann bekannten Methoden und Vorrichtungen aufgebracht werden. Geeignete Vorrichtungen sind beispielsweise Stempel, teflonbeschichtete Gegenhaltebleche oder Walzen. Bevorzugt wird der Gegendruck durch eine Walze oder ein teflonbeschichtetes Gegenhalteblech aufgebracht, insbesondere bevorzugt durch eine glatte Walze.

Die Vorrichtung zum Aufbringen des Gegendrucks, bevorzugt die Walze oder das teflonbeschichtete Gegenhalteblech, insbesondere bevorzugt die glatte Walze, kann kalt sein, ebenso ist es möglich, dass sie erwärmt wird.

Unter "kalt" wird eine Temperatur von maximal 80 °C verstanden, also beispielsweise eine Temperatur im Bereich von 10 °C bis 80 °C, bevorzugt im Bereich von 20 bis 75 °C und insbesondere bevorzugt im Bereich von 50 bis 70 °C.

Ebenso ist es möglich, dass die glatte Walze erwärmt wird. Beispielsweise wird sie auf eine Temperatur erwärmt, die es ermöglicht, dass die erste Seite der unstrukturierten thermoplastischen Schaumstoffplatte auf die Temperatur (T) wie in Schritt b) erwärmt wird und/oder bei dieser gehalten wird.

Bevorzugt wird in Schritt c) die zumindest eine Vertiefung in die zweite Seite der unstrukturierten thermoplastischen Schaumstoffplatte eingebracht durch ein Prägewerkzeug, bevorzugt durch eine Prägewalze, wobei während Schritt c) auf die erste Seite der unstrukturierten thermoplastischen Schaumstoffplatte ein Gegendruck aufgebracht wird. Bevorzugt wird der Gegendruck auf die erste Seite der unstrukturierten thermoplastischen Schaumstoffplatte aufgebracht durch eine glatte Walze. Insbesondere bevorzugt ist die glatte Walze kalt und weist beispielsweise eine Temperatur von höchstens 80 °C auf.

Erfindungsgemäß bevorzugt wird nur in die zweite Seite der unstrukturierten thermoplastischen Schaumstoffplatte zumindest eine Vertiefung eigebracht.

Dies bedeutet, dass in die erste Seite der unstrukturierten thermoplastischen Schaumstoffplatte keine Vertiefung eingebracht wird.

Insbesondere bevorzugt weist die erste Seite der unstrukturierten thermoplastischen Schaumstoffplatte eine Schäumhaut auf und es wird nur in die zweite Seite der unstrukturierten thermoplastischen Schaumstoffplatte zumindest eine Vertiefung eingebracht.

Erfindungsgemäß werden die Schritte b) und c) nacheinander oder gleichzeitig durchgeführt. Bevorzugt werden die Schritte b) und c) nacheinander durchgeführt.

Werden die Schritte b) und c) nacheinander durchgeführt, so ist es bevorzugt, dass wenn während des Einbringens der mindestens einen Vertiefung in Schritt c) ein Gegendruck aufgebracht wird, die insbesondere bevorzugt eingesetzte glatte Walze kalt ist.

Werden die Schritte b) und c) nacheinander durchgeführt, so wird Schritt c) üblicherweise spätestens 5 min, bevorzugt spätestens 1 min und insbesondere bevorzugt spätestens 0,5 min nach Beendigung von Schritt b) durchgeführt.

"Nach Beendigung von Schritt b)" bedeutet im Rahmen der vorliegenden Erfindung, dass die unstrukturierte thermoplastische Schaumstoffplatte und/oder das bevorzugt zum Erwärmen der ersten Seite der unstrukturierten thermoplastischen Schaumstoffplatte eingesetzte Heizelement aus der Position, in der ein Erwärmen der ersten Seite der unstrukturierten thermoplastischen Schaumstoffplatte möglich ist, entfernt wird und wieder in einer Position steht, in der kein Aufheizen mehr möglich ist.

Es ist außerdem bevorzugt, dass Schritt b) spätestens 5 min, bevorzugt spätestens 1 min und insbesondere bevorzugt spätestens 0,5 min nach Beendigung von Schritt c) durchgeführt wird.

"Nach Beendigung von Schritt c)" bedeutet im Rahmen der vorliegenden Erfindung, dass das Einbringen der zumindest einen Vertiefung in die zweite Seite der unstrukturierten thermoplastischen Schaumstoffplatte beendet worden ist.

Darüber hinaus kann zunächst Schritt b), dann Schritt c) und anschließend noch einmal Schritt b) durchgeführt werden. Es ist also außerdem bevorzugt, dass im Anschluss an Schritt a) Schritt b) durchgeführt wird, im Anschluss an Schritt b) Schritt c) durchgeführt wird und im Anschluss an Schritt c) erneut Schritt b) durchgeführt wird.

Ein weiterer Gegenstand der vorliegenden Erfindung ist eine einseitig strukturierte thermoplastische Schaumstoffplatte, erhältlich nach dem erfindungsgemäßen Verfahren.

Die einseitig strukturierte thermoplastische Schaumstoffplatte, erhältlich nach dem erfindungsgemäßen Verfahren, ist vorzugsweise nur auf der zweiten Seite strukturiert, sie weist also nur auf der zweiten Seite zumindest eine Vertiefung auf. Auf der ersten Seite weist die einseitig unstrukturierte thermoplastische Schaumstoffplatte vorzugsweise eine Schäumhaut auf.

Bevorzugt weist die einseitig strukturierte thermoplastische Schaumstoffplatte, erhältlich nach dem erfindungsgemäßen Verfahren, also auf der zweiten Seite zumindest eine Vertiefung und auf der ersten Seite eine Schäumhaut auf.

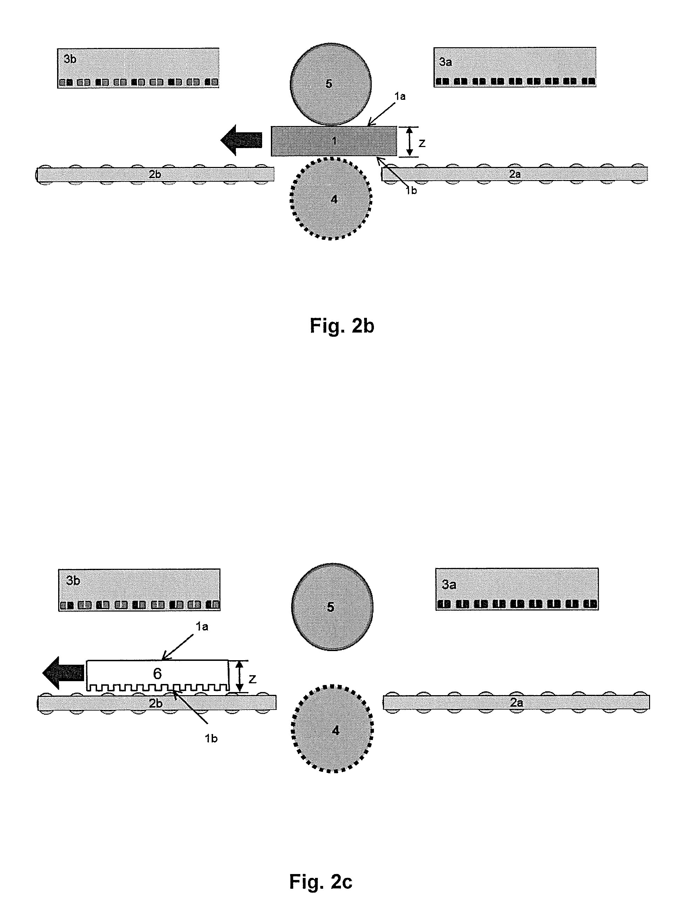

Die Figuren 2a, 2b und 2c zeigen drei Schritte einer bevorzugten Ausführungsform des erfindungsgemäßen Verfahrens. Die unstrukturierte thermoplastische Schaumstoffplatte 1, die eine erste Seite 1a und eine zweite Seite 1b sowie eine Dicke z aufweist, wird auf einer ersten Fördereinrichtung 2a bereitgestellt (Schritt a)) (Figur 2a). Als erste Fördereinrichtung eignen sich alle dem Fachmann bekannten Fördereinrichtungen 2a, beispielsweise Rollenförderer, Kettenförderer und Bandförderer. Bevorzugt sind Rollenförderer.

Durch die erste Fördereinrichtung 2a wird die unstrukturierte thermoplastische Schaumstoffplatte 1 vorwärts bewegt. Die Geschwindigkeit, mit der die unstrukturierte thermoplastische Schaumstoffplatte 1 bewegt wird, liegt beispielsweise im Bereich von 1 bis 20 m/min, bevorzugt im Bereich von 3 bis 15 m/min und insbesondere bevorzugt im Bereich von 5 bis 10 m/min. Dabei wird die unstrukturierte thermoplastische Schaumstoffplatte 1 unter einer Wärmequelle 3a entlanggeführt. Sie wird so unter der Wärmequelle 3a entlanggeführt, dass sich die erste Seite 1a der unstrukturierten thermoplastischen Schaumstoffplatte 1 auf eine Temperatur (T) im Bereich von 30 bis 250 °C, bevorzugt im Bereich von 50 bis 200 °C und insbesondere bevorzugt im Bereich von 70 bis 110 °C erwärmt (Schritt b)).

Durch die Fördereinrichtung 2a wird die unstrukturierte thermoplastische Schaumstoffplatte 1 vorwärts bewegt, so dass sie, nachdem die erste Seite 1a der unstrukturierten thermoplastischen Schaumstoffplatte 1 durch die Wärmequelle 3a erwärmt worden ist, über ein Prägewerkzeug 4 geführt wird (Figur 2b). Dabei wird die zumindest eine Vertiefung in die unstrukturierte thermoplastische Schaumstoffplatte 1 eingebracht. In Figur 2b wird durch eine glatte Walze 5 ein Gegendruck auf die erste Seite der unstrukturierten thermoplastischen Schaumstoffplatte 1 aufgebracht. Die glatte Walze 5 ist vorzugsweise kalt. Durch das Einbringen der zumindest einen Vertiefung in die zweite Seite 1b der unstrukturierten thermoplastischen Schaumstoffplatte 1 wird die einseitig strukturierte thermoplastische Schaumstoffplatte 6 erhalten, bei der die zweite Seite 1b strukturiert ist, die erste Seite 1a ist unstrukturiert. Die einseitig strukturierte thermoplastische Schaumstoffplatte 6 kann dann über eine zweite Fördereinrichtung 2b weiterbewegt werden (Figur 2c). Für die zweite Fördereinrichtung 2b gelten die gleichen Ausführungen und Bevorzugungen wie für die erste Fördereinrichtung 2a. Durch die zweite Fördereinrichtung 2b kann die einseitig strukturierte thermoplastische Schaumstoffplatte 6 erneut unter einer Wärmequelle 3b hindurchgeführt werden, so dass die erste Seite 1a der einseitig strukturierten thermoplastischen Schaumstoffplatte 6 erwärmt wird, vorzugsweise wird die erste Seite 1a der einseitig strukturierten thermoplastischen Schaumstoffplatte 6 auf eine Temperatur im Bereich von 30 bis 250 °C, bevorzugt im Bereich von 50 bis 200 °C und insbesondere bevorzugt im Bereich von 70 bis 110 °C erwärmt (Figur 2c).

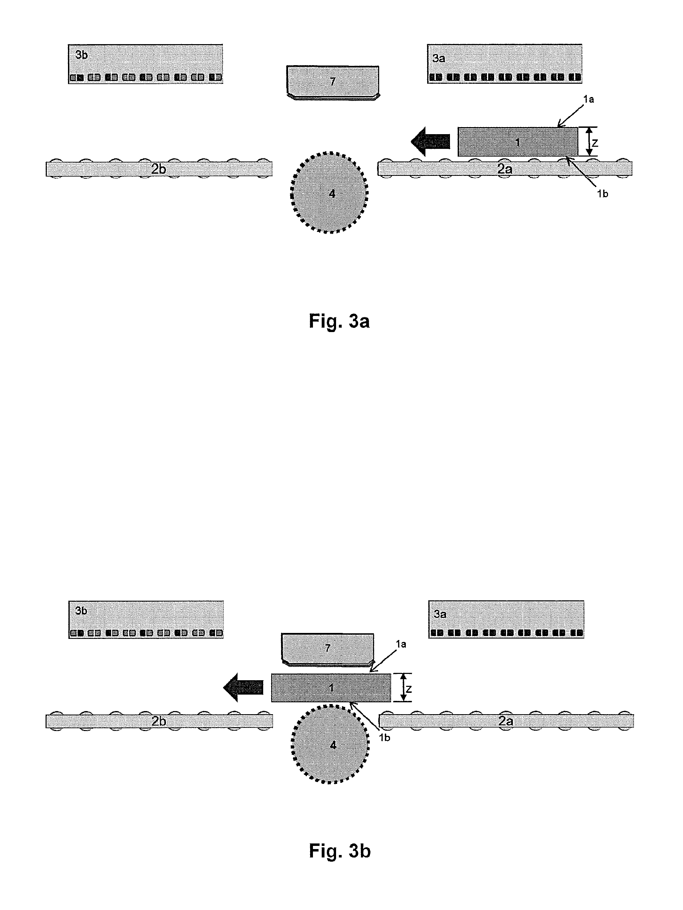

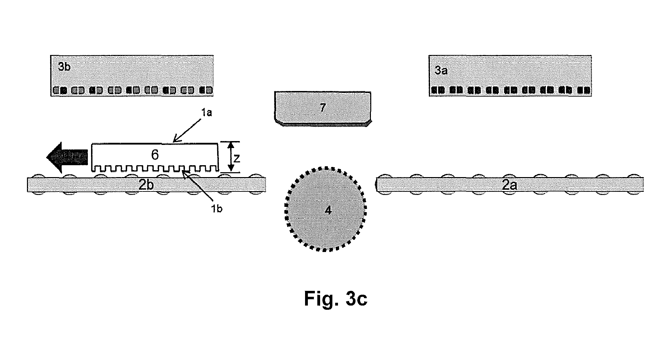

Die Figuren 3a, 3b und 3c sind analog zu den Figuren 2a, 2b und 2c. Gleiche Bezugszeichen haben die gleiche Bedeutung. Anstelle der glatten Walze 5 wird zum Aufbringen des Gegendrucks auf die erste Seite 1a der unstrukturierten thermoplastischen Schaumstoffplatte 1 ein teflonbeschichtetes Gegenhalteblech 7 eingesetzt.

Nachfolgend wird die Erfindung durch Beispiele näher erläutert, ohne sie hierauf zu beschränken.

### Vergleichsbeispiel 1

Eine 120 mm dicke Platte aus Polystyrolschaumstoff, der eine Dichte von 32 kg/m³ aufwies, wurde einseitig geprägt.

Die Geschwindigkeit des Prägevorgangs betrug 7 m/min, die Prägewalze wurde auf 300 °C erwärmt. Die erste Seite der Platte wurde nicht erwärmt. Beim Prägen wurde ein Gegendruck durch eine kalte glatte Walze aufgebracht.

Die Schaumstoffplatte hatte eine Länge von 285 m und verzog sich um 10 bis 12 mm.

### Erfindungsgemäßes Beispiel 2

Eine 120 mm dicke Platte aus Polystyrolschaumstoff, der eine Dichte von 32 kg/m³ aufwies, wurde einseitig geprägt.

Die Geschwindigkeit des Prägevorgangs betrug 7 m/min, die Prägewalze wurde auf 300 °C erwärmt. Während der Prägung wurde ein Gegendruck durch eine kalte glatte Walze aufgebracht. Die erste Seite der Platte wurde mit einem IR-Strahler auf eine Temperatur von 95 °C erwärmt und für eine Zeit von ca. 15 sec auf dieser Temperatur gehalten.

Die 285 m lange Schaumstoffplatte und verzog sich um einen Betrag von ca. 1 bis 2 mm.

## Patentansprüche

1. Verfahren zur Herstellung einer einseitig strukturierten thermoplastischen Schaumstoffplatte, umfassend die Schritte a) bis c)
a) Bereitstellung einer unstrukturierten thermoplastischen Schaumstoffplatte, die mindestens ein Polymer mit einer Glasübergangstemperatur (T_{G}) enthält und die eine erste Seite und eine zweite Seite umfasst,
b) Erwärmen der ersten Seite der unstrukturierten thermoplastischen Schaumstoffplatte auf eine Temperatur (T), die unterhalb der Glasübergangstemperatur (T_{G}) des in der unstrukturierten thermoplastischen Schaumstoffplatte enthaltenen mindestens einen Polymers liegt, und
c) Einbringen von zumindest einer Vertiefung in die zweite Seite der unstrukturierten thermoplastischen Schaumstoffplatte unter Erhalt der einseitig strukturierten thermoplastischen Schaumstoffplatte,
wobei die Schritte b) und c) nacheinander oder gleichzeitig durchgeführt werden.

2. Verfahren gemäß Anspruch 1, **dadurch gekennzeichnet, dass** die Temperatur (T) in Schritt b) im Bereich von 30 bis 250 °C, bevorzugt im Bereich von 50 bis 200 °C, insbesondere bevorzugt im Bereich von 70 bis 110 °C, liegt.

3. Verfahren gemäß Anspruch 1 oder 2, **dadurch gekennzeichnet, dass** in Schritt b) die erste Seite der unstrukturierten thermoplastischen Schaumstoffplatte durch Wasserdampf, Warmluft, einen IR-Strahler und/oder ein Heizelement, wobei das Heizelement vorzugsweise ein Heizschwert, ein Heizgitter oder eine Heizplatte ist, auf die Temperatur (T) erwärmt wird.

4. Verfahren gemäß einem der Ansprüche 1 bis 3, **dadurch gekennzeichnet, dass** die Temperatur der zweiten Seite der unstrukturierten thermoplastischen Schaumstoffplatte während Schritt c) im Bereich von 50 bis 300 °C, vorzugsweise im Bereich von 70 bis 250 °C, insbesondere bevorzugt im Bereich von 90 bis 220 °C, oberhalb der Glasübergangstemperatur (T_{G}) des in der unstrukturierten thermoplastischen Schaumstoffplatte enthaltenen mindestens einen Polymers liegt.

5. Verfahren gemäß einem der Ansprüche 1 bis 4, **dadurch gekennzeichnet, dass** die in Schritt c) eingebrachte zumindest eine Vertiefung eine Tiefe im Bereich von 0,1 bis 10 mm, bevorzugt im Bereich von 0,5 bis 8 mm, insbesondere bevorzugt im Bereich von 0,7 bis 5 mm, aufweist.

6. Verfahren gemäß einem der Ansprüche 1 bis 5, **dadurch gekennzeichnet, dass**
i) in Schritt c) die zumindest eine Vertiefung in die zweite Seite der unstrukturierten thermoplastischen Schaumstoffplatte eingebracht wird durch ein Prägewerkzeug, bevorzugt durch eine Prägewalze, oder
ii) in Schritt c) die zumindest eine Vertiefung in die zweite Seite der unstrukturierten thermoplastischen Schaumstoffplatte eingebracht wird durch ein Prägewerkzeug, bevorzugt durch eine Prägewalze, wobei das Prägewerkzeug die zweite Seite der unstrukturierten thermoplastischen Schaumstoffplatte erwärmt, bevorzugt erwärmt das Prägewerkzeug die zweite Seite der unstrukturierten thermoplastischen Schaumstoffplatte auf eine Temperatur, die im Bereich von 50 bis 300 °C, vorzugsweise im Bereich von 70 bis 250 °C, insbesondere bevorzugt im Bereich von 90 bis 220 °C, oberhalb der Glasübergangstemperatur (T_{G}) des in der unstrukturierten thermoplastischen Schaumstoffplatte enthaltenen mindestens einen Polymers liegt, und/oder
iii) in Schritt c) die zumindest eine Vertiefung in die zweite Seite der unstrukturierten thermoplastischen Schaumstoffplatte eingebracht wird durch ein Prägewerkzeug, bevorzugt durch eine Prägewalze, wobei während Schritt c) auf die erste Seite der unstrukturierten thermoplastischen Schaumstoffplatte ein Gegendruck aufgebracht wird, bevorzugt wird der Gegendruck auf die erste Seite der unstrukturierten thermoplastischen Schaumstoffplatte aufgebracht durch eine glatte Walze.

7. Verfahren gemäß einem der Ansprüche 1 bis 6, **dadurch gekennzeichnet, dass**
i) Schritt c) spätestens 5 min, bevorzugt spätestens 1 min, insbesondere bevorzugt spätestens 0,5 min, nach Beendigung von Schritt b) durchgeführt wird und/oder,
ii) Schritt b) spätestens 5 min, bevorzugt spätestens 1 min, insbesondere bevorzugt spätestens 0,5 min, nach Beendigung von Schritt c) durchgeführt wird und/oder,
iii) im Anschluss an Schritt a) Schritt b) durchgeführt wird, im Anschluss an Schritt b) Schritt c) durchgeführt wird und im Anschluss an Schritt c) erneut Schritt b) durchgeführt wird.

8. Verfahren gemäß einem der Ansprüche 1 bis 7, **dadurch gekennzeichnet, dass**
i) die erste Seite der unstrukturierten thermoplastischen Schaumstoffplatte der zweiten Seite der unstrukturierten thermoplastischen Schaumstoffplatte gegenüber liegt, und/oder
ii) nur in die zweite Seite der unstrukturierten thermoplastischen Schaumstoffplatte zumindest eine Vertiefung eingebracht wird.

9. Verfahren gemäß einem der Ansprüche 1 bis 8, **dadurch gekennzeichnet, dass** die unstrukturierte thermoplastische Schaumstoffplatte ein Partikelschaumstoff oder ein Extrusionsschaumstoff, vorzugsweise ein Extrusionsschaumstoff, ist.

10. Verfahren gemäß einem der Ansprüche 1 bis 9, **dadurch gekennzeichnet, dass** das in der unstrukturierten thermoplastischen Schaumstoffplatte enthaltene mindestens eine Polymer ausgewählt ist aus der Gruppe bestehend aus Polystyrol, Polystyrolcopolymeren, Polyethersulfon, Polysulfon, Polyethylenterephthalat, Polyurethan, Polyolefinen, Polyolefincopolymeren und Acrylpolymeren, bevorzugt ausgewählt aus der Gruppe bestehend aus Polystyrol, Polystyrolcopolymeren und Polyethylenterephthalat.

11. Verfahren gemäß einem der Ansprüche 1 bis 10, **dadurch gekennzeichnet, dass** die in Schritt a) bereitgestellte unstrukturierte thermoplastische Schaumstoffplatte eine Länge (x-Richtung) von 500 bis 3500 mm, vorzugsweise von 1000 bis 3000 mm, eine Breite (y-Richtung) von 500 bis 1250 mm, vorzugsweise von 500 bis 900 mm, und eine Dicke (z-Richtung) von 20 bis 300 mm, vorzugsweise von 50 bis 200 mm, aufweist.

12. Verfahren gemäß einem der Ansprüche 1 bis 11, **dadurch gekennzeichnet, dass** die in Schritt a) bereitgestellte unstrukturierte thermoplastische Schaumstoffplatte auf der ersten Seite und/oder auf der zweiten Seite eine Schäumhaut aufweist.

13. Einseitig strukturierte thermoplastische Schaumstoffplatte, erhältlich nach einem Verfahren gemäß einem der Ansprüche 1 bis 12.
